# EUROPEAN PATENT APPLICATION

(11) **EP 3 778 825 A1**
(43) Date of publication of application: **17.02.2021**
(21) Application number: 19785148.8
(22) Date of filing: 12.04.2019
(51) Int. Cl.: C09K 3/18, C08G 73/04, C09D 179/02

(54) **LIQUID REPELLENT**

(30) Priority: 12.04.2018 JP 2018076892
(71) Applicant: DAIKIN INDUSTRIES, LTD., Osaka 530-8323 (JP); NATIONAL UNIVERSITY CORPORATION OITA UNIVERSITY, Oita-shi Oita 870-1192 (JP)
(72) Inventor: KOBAYASHI, Tsutomu, Osaka-shi, Osaka 530-8323 (JP); SHIRAI, Atsushi, Osaka-shi, Osaka 530-8323 (JP); KISHIKAWA, Yosuke, Osaka-shi, Osaka 530-8323 (JP); UJIIE, Seiji, Oita-shi, Oita 870-1192 (JP); TOMITAKA, Shiori, Oita-shi, Oita 870-1192 (JP)
(74) Representative: Hoffmann Eitle
(86) International application number: PCT/JP2019/016062
(87) International publication number: WO 2019/198832

(57) **Abstract**

An object of the present invention is to provide a novel liquid repellent. A liquid repellent including a poly(hydrocarbylamine) derivative, which is poly(hydrocarbylamine) substituted by one or more substituents, wherein at least one of the substituents is a substituent on an amine nitrogen in the poly(hydrocarbylamine), and is represented by the formula:

-R^{ay}

in which R^{ay} is a hydroxyethyl group optionally having one or more substituents (at least one of the substituents is an alkyl group optionally having one or more substituents).

## Description

### Technical Field

The present invention relates to a and the like.

### Background Art

Various fluorine-containing compounds having excellent oil repellency have been used.

However, since such a fluorine-containing compound is poorly soluble in a common solvent (non-fluorine organic solvent), it must be dissolved in an expensive fluorine-containing organic solvent for coating.

To cope with this, Patent Literature 1 proposes an oil-repellent and/or water-repellent coating agent highly soluble in a common solvent.

### Citation List

### Patent Literature

PTL 1: International Publication No. WO 2013/115380

### Summary of Invention

### Technical Problem

It is useful if a liquid repellent in which the amount of use of an expensive fluorine-containing solvent is reduced and which, in particular, can be dissolved in water for coating is provided.

Thus, an object of the present invention is to provide a novel liquid repellent, particularly a liquid repellent which can be dissolved in water for coating.

In particular, an object of the present invention is to provide a liquid repellent capable of imparting liquid repellency to the surface of an article when applied to the surface of the article.

### Solution to Problem

The present inventors have conducted intensive studies and as a result have found that the above problem can be solved by a liquid repellent comprising a poly(hydrocarbylamine) derivative, which is poly(hydrocarbylamine) substituted by one or more substituents, wherein at least one of the substituents is a substituent on an amine nitrogen in the poly(hydrocarbylamine), and is represented by the formula:

-R^{ay}

in which R^{ay} is a hydroxyethyl group optionally having one or more substituents (at least one of the substituents is an alkyl group optionally having one or more substituents and into which one or more -O- moieties are optionally inserted, or an aryl group optionally having one or more substituents), and the present invention has been completed.

The present invention includes the following aspects.
Item 1. A liquid repellent comprising a poly(hydrocarbylamine) derivative, which is poly(hydrocarbylamine) substituted by one or more substituents, wherein at least one of the substituents is a substituent on an amine nitrogen in the poly(hydrocarbylamine), and is represented by the formula:

   -R^{ay}

   in which R^{ay} is a hydroxyethyl group optionally having one or more substituents (at least one of the substituents is an alkyl group optionally having one or more substituents and into which one or more -O- moieties are optionally inserted, or an aryl group optionally having one or more substituents).
Item 2. The liquid repellent according to Item 1, wherein the poly(hydrocarbylamine) derivative is a polyethyleneimine derivative, which is polyethyleneimine substituted by one or more substituents, wherein at least one of the substituents is a substituent on an amine nitrogen in the polyethyleneimine, and is represented by the formula:

   -R^{ay}

   in which R^{ay} is a hydroxyethyl group optionally having one or more substituents (at least one of the substituents is an alkyl group optionally having one or more substituents and into which one or more -O- moieties are optionally inserted, or an aryl group optionally having one or more substituents).
Item 3. The liquid repellent according to Item 1 or 2, wherein the poly(hydrocarbylamine) derivative has a branched-chain or cyclic structure, or a structure of a combination thereof.
Item 4. The liquid repellent according to any one of Items 1 to 3, wherein R^{ay} is a 2-hydroxyethyl group optionally having one or more substituents (at least one of the substituents is R^{fa}; R^{fa} is an alkyl group optionally having one or more substituents and into which one or more -O- moieties are optionally inserted, or an aryl group optionally having one or more substituents).
Item 5. The liquid repellent according to any one of Items 1 to 4, wherein the poly(hydrocarbylamine) derivative is a poly(hydrocarbylamine) derivative having one or more constituent units represented by formula (U1):

   -chain hydrocarbon-N (-R^{ay})- (U1)

   in which the symbols are as defined above.
Item 6. The liquid repellent according to any one of Items 1 to 5, wherein the poly(hydrocarbylamine) derivative is a polymer comprising:
   ne terminal groups E,
   np constituent units G^{p},
   nqf constituent units G^{qf} and
   nr constituent units G^{r}, wherein
   the constituent units G^{p} in each occurrence are the same or different, and constituent units represented by formula (Up1) :

   -CH₂CH₂-NH- (Up1);

   the constituent units G^{qf} in each occurrence are the same or different, and constituent units represented by formula (Uq1) :

   -CH₂CH₂-N (-R^{qfy}) - (Uq1)

   in which R^{qfy} represents a hydroxyethyl group optionally having one or more substituents (at least one of the substituents is an alkyl group optionally having one or more substituents and into which one or more -O- moieties are optionally inserted, or an aryl group optionally having one or more substituents);
   the constituent units G^{r} in each occurrence are the same or different, and constituent units represented by formula (Ur1) :

   -CH₂CH₂-N (-R^{ot}) - (Ur1)

   in which R^{ot} represents a substituent different from R^{qfy}; and
   ne is an integer of 0 to 50,000,
   np is an integer of 0 to 50,000,
   nqf is an integer of 0 to 50,000,
   nr is an integer of 0 to 50,000, and
   the sum of np and nqf is an integer of 100 or more,
   the ratio nqf /(np + nqf) is in the range of 0.02 to 100%,
   the constituent units G^{p}, G^{qf} and G^{r} are bonded in an optional form, and
   the constituent units G^{p}, G^{qf} and G^{r} are optionally linked to another constituent unit at a moiety not constituting the main chain.
Item 7. The liquid repellent according to Item 6, wherein R^{qfy} is a hydroxyethyl group optionally having one or more substituents (at least one of the substituents is a fluoroalkyl group optionally having one or more substituents and into which one or more -O- moieties are optionally inserted).
Item 8. The liquid repellent according to any one of Items 1 to 7, which is for surface treatment.
Item 9. The liquid repellent according to any one of Items 1 to 8, which is for imparting liquid repellency to a surface of an article.
Item 10. A liquid repellent membrane comprising the liquid repellent according to any one of Items 1 to 9.
Item 11. A method for producing the liquid repellent membrane according to Item 10, the method comprising:
   1) coating a surface of an article with a liquid comprising poly(hydrocarbylamine);
   2) further coating the surface with a liquid comprising oxirane optionally having one or more substituents (at least one of the substituents is an alkyl group optionally having one or more substituents and into which one or more -O- moieties are optionally inserted, or an aryl group optionally having one or more substituents), and reacting at least part thereof to form the liquid repellent membrane according to Item 10.
Item 12. A method for producing the liquid repellent membrane according to Item 10, the method comprising:
   coating a surface of an article with a liquid comprising
   poly(hydrocarbylamine) and
   oxirane optionally having one or more substituents (at least one of the substituents is an alkyl group optionally having one or more substituents and into which one or more -O-moieties are optionally inserted, or an aryl group optionally having one or more substituents); and
   reacting at least part thereof to form the liquid repellent membrane according to Item 10.
Item 13. An article comprising the liquid repellent membrane according to Item 10.
Item 14. A method for producing an article comprising the liquid repellent membrane according to Item 10, the method comprising:
   coating a surface of an article with a liquid comprising poly(hydrocarbylamine) and oxirane optionally having one or more substituents (at least one of the substituents is an alkyl group optionally having one or more substituents); and
   reacting at least part thereof to form the liquid repellent membrane according to Item 10.
Item 15. A polyethyleneimine derivative, which is polyethyleneimine substituted by one or more substituents, wherein at least one of the substituents is a substituent on an amine nitrogen in the polyethyleneimine, and is represented by the formula:

   -C₂R₄OH

   in which R in each occurrence is the same or different and represents a hydrogen atom or a substituent, provided that at least one of the 4 R is:
   (1) a fluoroalkyl group optionally having one or more substituents and into which one or more -O- moieties are optionally inserted;
   (2) an alkyl group optionally having one or more substituents and into which one or more -O- moieties are optionally inserted; or
   (3) a fluoroaryl group optionally having one or more substituents.
Item 16. A liquid repellent comprising the polyethyleneimine derivative according to Item 15.
Item 17. A kit of a liquid repellent comprising:
   1) polyethyleneimine; and
   2) oxirane optionally having one or more substituents (at least one of the substituents is an alkyl group optionally having one or more substituents and into which one or more -O-moieties are optionally inserted, or an aryl group optionally having one or more substituents).

### Advantageous Effects of Invention

The present invention provides a novel liquid repellent.

### Brief Description of Drawings

[Fig. 1] Fig. 1 is a DSC thermogram of PEI-Ex2 thin film (Test Example 2).
[Fig. 2] Fig. 2 is an IR spectrum of PEI-Ex2 thin film (Test Example 3).
[Fig. 3] Fig. 3 is an NMR spectrum of PEI-Ex2 thin film (Test Example 4).

### Description of Embodiments

### 1. Terminology

The symbols and abbreviations in the present description will be understood in the meaning usually used in the technical field of the present invention in the context of the present description unless otherwise specified.

The term "comprising" in the present description is used to mean the terms "consisting essentially of" and "consisting of."

The steps, treatments or operations described in the present description may be performed at room temperature unless otherwise specified.

The room temperature in the present description means a temperature in the range of 10 to 40°C.

The notation "Cn-Cm" (in which n and m is a number) in the present description means that the number of carbon atoms is n or more and m or less as is generally understood by those skilled in the art.

The "liquid repellent" (i.e. liquid-repelling agent) in the present description means an agent capable of imparting liquid repellency to the surface of an article when applied to the surface of the article (e.g., when the surface is coated with the agent).

The term "liquid-repelling" in the present description may mean being water-repelling, oil-repelling or both.

The term "liquid repellency" in the present description may mean water-repellency, oil-repellency or both.

The term "surface of an article" in the present description may mean the entire surface or part of the surface of an article.

Examples of "halo (groups)" in the present description may include fluoro (groups), chloro (groups), bromo (groups) and iodo (groups) unless otherwise specified.

Examples of "halogen (atoms)" in the present description may include fluorine (atoms), chlorine (atoms), bromine (atoms) and iodine (atoms) unless otherwise specified.

The "organic group" in the present description means a group having one or more carbon atoms (or a group formed when a hydrogen atom is removed from an organic compound).

The "organic group" in the present description may be, for example, a hydrocarbon group optionally having one or more substituents [one or more moieties selected from the group consisting of -NR°-, =N-, -N=, -O-, -S-, -C(=O)O-, -OC(=O)-,-C(=O)-, -S(=O)-, -S(=O)₂-, -S(=O)₂-NR°-, -NR°-S(=O)₂-, -S(=O)-,-S(=O)-NR)°- and NR°-S (=O) - (in which R° is independently a hydrogen atom or an organic group) are optionally inserted to the hydrocarbon group].

Examples of hydrocarbon groups into which a hetero atom is inserted as described above may include a non-aromatic heterocyclic group and a heteroaryl group, as is generally understood based on common knowledge in chemistry.

In the present description, the number of carbon atoms in the "hydrocarbon group" in the "hydrocarbon group optionally having one or more substituents" may be, for example, 1 to 100, 1 to 80, 1 to 60, 1 to 40, 1 to 30, 1 to 20, or 1 to 10 (e.g., 1, 2, 3, 4, 5, 6, 7, 8, 9, 10).

Examples of such "organic groups" include an alkyl group optionally having one or more substituents and into which one or more -O- moieties are optionally inserted, an alkenyl group optionally having one or more substituents, an alkynyl group optionally having one or more substituents, a cycloalkyl group optionally having one or more substituents, a cycloalkenyl group optionally having one or more substituents, a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
an aldehyde group,
R^{r}O-,
R^{r}CO-,
R^{r}SO₂-,
R^{r}OCO- and
R^{r}OSO₂- in which R^{r} is independently an alkyl group optionally having one or more substituents and into which one or more -O-moieties are optionally inserted,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents, a non-aromatic heterocyclic group optionally having one or more substituents,
or a heteroaryl group optionally having one or more substituents.

In the present description, examples of "substituents" in the "hydrocarbon group optionally having one or more substituents," "alkyl group optionally having one or more substituents and into which one or more -O- moieties are optionally inserted," "alkenyl group optionally having one or more substituents", "alkynyl group optionally having one or more substituents", "cycloalkyl group optionally having one or more substituents", "cycloalkenyl group optionally having one or more substituents," "cycloalkadienyl group optionally having one or more substituents," "aryl group optionally having one or more substituents" and "aralkyl group optionally having one or more substituents" may include a halo group, a nitro group, a cyano group, an oxo group, a thioxo group, a sulfo group, a sulfamoyl group, a sulfinamoyl group and a sulfenamoyl group, respectively.

The number of those substituents may be one and within the range of the maximum substitutable number (e.g., 1, 2, 3, 4, 5, 6).

The term "hydrocarbon group" and "hydrocarbyl (group)" in the present description may be interchangeably used.

The hydrocarbon group may have a chain structure (non-cyclic structure) or a cyclic structure, or a structure of a combination of one or more of them as is generally understood by those skilled in the art.

Examples of "hydrocarbon groups" in the present description may include an alkyl group, an alkenyl group, an alkynyl group, a cycloalkyl group, a cycloalkenyl group, a cycloalkadienyl group, an aryl group, an aralkyl group and a group of a combination thereof.

Examples of "alkyl groups" in the present description may include straight-chain or branched-chain alkyl groups such as methyl, ethyl, propyl, isopropyl, butyl, isobutyl, sec-butyl, tert-butyl, pentyl, isopentyl, neopentyl, hexyl, heptyl, octyl, nonyl, decyl, undecyl, dodecyl, tridecyl, tetradecyl, pentadecyl, hexadecyl, heptadecyl, octadecyl, nonadecyl, icosyl and docosyl, unless otherwise specified.

The "alkyl group" in the present description may be, for example, an alkyl group having 1 to 30 carbon atoms, 1 to 20 carbon atoms, 6 to 20 carbon atoms, 1 to 20 carbon atoms, 1 to 15 carbon atoms, 1 to 12 carbon atoms, 1 to 10 carbon atoms, 1 to 6 carbon atoms, 1 to 4 carbon atoms, 1 to 3 carbon atoms, 6 carbon atoms, 5 carbon atoms, 4 carbon atoms, 3 carbon atoms, 2 carbon atoms, or 1 carbon atom.

The "(halo)alkyl group" in the present description means an alkyl group or a haloalkyl group unless otherwise specified.

The "haloalkyl group" in the present description is an alkyl group in which at least one hydrogen atom is substituted by a halogen atom.

In the present description, the number of halogen atoms which the "haloalkyl group" has may be one or more (e.g., 1 to 3, 1 to 6, 1 to 12, 1 to the maximum substitutable number).

In the present description, the "haloalkyl group" may be, for example, a haloalkyl group having 1 to 30 carbon atoms, 1 to 20 carbon atoms, 6 to 20 carbon atoms, 1 to 20 carbon atoms, 1 to 15 carbon atoms, 1 to 12 carbon atoms, 1 to 10 carbon atoms, 1 to 6 carbon atoms, 1 to 4 carbon atoms, 1 to 3 carbon atoms, 6 carbon atoms, 5 carbon atoms, 4 carbon atoms, 3 carbon atoms, 2 carbon atoms, or 1 carbon atom.

Examples of "(halo)alkyl groups" include a (fluoro)alkyl group.

The (fluoro)alkyl group in the present description means an alkyl group or a fluoroalkyl group unless otherwise specified.

The "fluoroalkyl group" in the present description is an alkyl group in which at least one hydrogen atom is substituted by a fluorine atom.

In the present description, the number of fluorine atoms which the "fluoroalkyl group" has may be one or more (e.g., 1 to 3, 1 to 6, 1 to 12, 1 to the maximum substitutable number).

In the present description, the "fluoroalkyl group" may be, for example, a fluoroalkyl group having 1 to 30 carbon atoms, 1 to 20 carbon atoms, 6 to 20 carbon atoms, 1 to 20 carbon atoms, 1 to 15 carbon atoms, 1 to 12 carbon atoms, 1 to 10 carbon atoms, 1 to 6 carbon atoms, 1 to 4 carbon atoms, 1 to 3 carbon atoms, 6 carbon atoms, 5 carbon atoms, 4 carbon atoms, 3 carbon atoms, 2 carbon atoms, or 1 carbon atom.

The (fluoro)alkyl group in the present description means an alkyl group or a fluoroalkyl group unless otherwise specified.

The "fluoroalkyl group" in the present description is an alkyl group in which at least one hydrogen atom is substituted by a fluorine atom. In the present description, the number of fluorine atoms which the "fluoroalkyl group" has may be one or more (e.g., 1 to 3, 1 to 6, 1 to 12, 1 to the maximum substitutable number). In the present description, the "fluoroalkyl group" may be, for example, a fluoroalkyl group having 1 to 30 carbon atoms, 1 to 20 carbon atoms, 6 to 20 carbon atoms, 1 to 20 carbon atoms, 1 to 15 carbon atoms, 1 to 12 carbon atoms, 1 to 10 carbon atoms, 1 to 6 carbon atoms, 1 to 4 carbon atoms, 1 to 3 carbon atoms, 6 carbon atoms, 5 carbon atoms, 4 carbon atoms, 3 carbon atoms, 2 carbon atoms, or 1 carbon atom.

The suffix "perhalogeno" means that all hydrogen atoms are substituted by a halo group as is generally understood by those skilled in the art.

The suffix "perfluoro" means that all hydrogen atoms are substituted by a fluoro group as is generally understood by those skilled in the art.

The "fluoroalkyl group" includes perfluoroalkyl group.

The "perfluoroalkyl group" is an alkyl group in which all hydrogen atoms are substituted by a fluorine atom. Specific examples of the perfluoroalkyl group include a trifluoromethyl group (CF₃-) and pentafluoroethyl group (C₂F₅-).

In the present description, the "fluoroalkyl group" may be, for example, a fluoroalkyl group having 1 to 30 carbon atoms, 1 to 20 carbon atoms, 6 to 20 carbon atoms, 1 to 20 carbon atoms, 1 to 15 carbon atoms, 1 to 12 carbon atoms, 1 to 10 carbon atoms, 1 to 6 carbon atoms, 1 to 4 carbon atoms, 1 to 3 carbon atoms, 6 carbon atoms, 5 carbon atoms, 4 carbon atoms, 3 carbon atoms, 2 carbon atoms, or 1 carbon atom.

In the present description, the "fluoroalkyl group" may be a straight-chain or branched-chain fluoroalkyl group.

In the present description, specific examples of "fluoroalkyl groups" include a fluoromethyl group, a difluoromethyl group, a trifluoromethyl group (CF₃-), a 2,2,2-trifluoroethyl group, a pentafluoroethyl group (C₂F₅-), a tetrafluoropropyl group (e.g., HCF₂CF₂CH₂-), a hexafluoropropyl group (e.g. (CF₃)₂CH-), a nonafluorobutyl group, an octafluoropentyl group (e.g., HCF₂CF₂CF₂CF₂CH₂-) and a tridecafluorohexyl group.

In the present description, examples of "alkenyl groups" may include straight-chain or branched-chain C2-10 alkenyl groups such as vinyl, 1-propen-1-yl, 2-propen-1-yl, isopropenyl, 2-buten-1-yl, 4-penten-1-yl and 5-hexen-1-yl unless otherwise specified.

In the present description, examples of "alkynyl groups" may include straight-chain or branched-chain C2-C10 alkynyl groups such as ethynyl, 1-propin-1-yl, 2-propin-1-yl, 4-pentin-1-yl and 5-hexin-1-yl unless otherwise specified.

In the present description, examples of "cycloalkyl groups" may include C3-C7 cycloalkyl groups such as cyclopropyl, cyclobutyl, cyclopentyl, cyclohexyl and cycloheptyl unless otherwise specified.

In the present description, examples of "cycloalkenyl groups" may include C3-C7 cycloalkenyl groups such as cyclopropenyl, cyclobutenyl, cyclopentenyl, cyclohexenyl and cycloheptenyl unless otherwise specified.

In the present description, examples of "cycloalkadienyl groups" may include C4-C10 cycloalkadienyl groups such as cyclobutadienyl, cyclopentadienyl, cyclohexadienyl, cycloheptadienyl, cyclooctadienyl, cyclononadienyl and cyclodecadienyl unless otherwise specified.

In the present description, the "aryl group" may be monocyclic, bicyclic, tricyclic or tetracyclic unless otherwise specified.

In the present description, the "aryl group" may be a C6-C18 aryl group unless otherwise specified.

In the present description, examples of "aryl groups" may include phenyl, 1-naphthyl, 2-naphthyl, 2-biphenyl, 3-biphenyl, 4-biphenyl and 2-anthryl unless otherwise specified.

The "fluoroaryl group" in the present description is an aryl group in which at least one hydrogen atom is substituted by a fluorine atom.

In the present description, examples of "aralkyl groups" may include benzyl, phenethyl, diphenylmethyl, 1-naphthylmethyl, 2-naphthylmethyl, 2,2-diphenylethyl, 3-phenylpropyl, 4-phenylbutyl, 5-phenylpentyl, 2-biphenylylmethyl, 3-biphenylylmethyl and 4-biphenylylmethyl unless otherwise specified.

In the present description, the "non-aromatic heterocyclic group" may be monocyclic, bicyclic, tricyclic or tetracyclic unless otherwise specified.

In the present description, the "non-aromatic heterocyclic group" may be, for example, a non-aromatic heterocyclic group having, as a ring constituting atom, 1 to 4 heteroatoms selected from an oxygen atom, a sulfur atom and a nitrogen atom in addition to carbon atoms unless otherwise specified.

In the present description, the "non-aromatic heterocyclic group" may be saturated or unsaturated unless otherwise specified.

In the present description, examples of "non-aromatic heterocyclic groups" may include tetrahydrofuryl, oxazolidinyl, imidazolinyl (e.g., 1-imidazolinyl, 2-imidazolinyl, 4-imidazolinyl), aziridinyl (e.g., 1- aziridinyl, 2-aziridinyl), azetidinyl (e.g., 1-azetidinyl, 2-azetidinyl), pyrrolidinyl (e.g., 1-pyrrolidinyl, 2-pyrrolidinyl, 3-pyrrolidinyl), piperidinyl (e.g., 1-piperidinyl, 2-piperidinyl, 3-piperidinyl), azepanyl (e.g., 1-azepanyl, 2-azepanyl, 3-azepanyl, 4-azepanyl), azocanyl (e.g., 1-azocanyl, 2-azocanyl, 3-azocanyl, 4-azocanyl), piperazinyl (e.g., 1,4-piperazin-1-yl, 1,4-piperazin-2-yl), diazepinyl (e.g., 1,4-diazepin-1-yl, 1,4-diazepin-2-yl, 1,4-diazepin-5-yl, 1,4-diazepin-6-yl), diazocanyl (e.g., 1,4-diazocan-1-yl, 1,4-diazocan-2-yl, 1,4-diazocan-5-yl, 1,4-diazocan-6-yl, 1,5-diazocan-1-yl, 1,5-diazocan-2-yl, 1,5-diazocan-3-yl), tetrahydropyranyl (e.g., tetrahydropyran-4-yl), morpholinyl (e.g., 4-morpholinyl), thiomorpholinyl (e.g., 4-thiomorpholinyl), 2-oxazolidinyl, dihydrofuryl, dihydropyranyl and dihydroquinolyl unless otherwise specified.

In the present description, examples of "heteroaryl groups" may include monocyclic aromatic heterocyclic groups (e.g., 5 or 6-membered monocyclic aromatic heterocyclic groups) and fused aromatic heterocyclic groups (e.g., 5 to 18-membered fused aromatic heterocyclic groups) unless otherwise specified.

In the present description, examples of "5 or 6-membered monocyclic aromatic heterocyclic groups" may include pyrrolyl (e.g., 1-pyrrolyl, 2-pyrrolyl, 3-pyrrolyl), furyl (e.g., 2-furyl, 3-furyl), thienyl (e.g., 2-thienyl, 3-thienyl), pyrazolyl (e.g., 1-pyrazolyl, 3-pyrazolyl, 4-pyrazolyl), imidazolyl (e.g., 1-imidazolyl, 2-imidazolyl, 4-imidazolyl), isoxazolyl (e.g., 3-isoxazolyl, 4-isoxazolyl, 5-isoxazolyl), oxazolyl (e.g., 2-oxazolyl, 4-oxazolyl, 5-oxazolyl), isothiazolyl (e.g., 3-isothiazolyl, 4-isothiazolyl, 5-isothiazolyl), thiazolyl (e.g., 2-thiazolyl, 4-thiazolyl, 5-thiazolyl), triazolyl (e.g., 1,2,3-triazol-4-yl, 1,2,4-triazol-3-yl), oxadiazolyl (e.g., 1,2,4-oxadiazol-3-yl, 1,2,4-oxadiazol-5-yl), thiadiazolyl (e.g., 1,2,4-thiadiazol-3-yl, 1,2,4-thiadiazol-5-yl), tetrazolyl, pyridyl (e.g., 2-pyridyl, 3-pyridyl, 4-pyridyl), pyridazinyl (e.g., 3-pyridazinyl, 4-pyridazinyl), pyrimidinyl (e.g., 2-pyrimidinyl, 4-pyrimidinyl, 5-pyrimidinyl) and pyradinyl unless otherwise specified.

In the present description, examples of "5 to 18-membered fused aromatic heterocyclic groups" may include isoindolyl (e.g., 1-isoindolyl, 2-isoindolyl, 3-isoindolyl, 4-isoindolyl, 5-isoindolyl, 6-isoindolyl, 7-isoindolyl), indolyl (e.g., 1-indolyl, 2-indolyl, 3-indolyl, 4-indolyl, 5-indolyl, 6-indolyl, 7-indolyl), benzo[b]furanyl (e.g., 2-benzo[b]furanyl, 3-benzo[b]furanyl, 4-benzo[b]furanyl, 5-benzo[b]furanyl, 6-benzo[b]furanyl, 7-benzo[b]furanyl), benzo[c]furanyl (e.g., 1-benzo[c]furanyl, 4-benzo[c]furanyl, 5-benzo[c]furanyl), benzo[b]thienyl, (e.g., 2-benzo[b]thienyl, 3-benzo[b]thienyl, 4-benzo[b]thienyl, 5-benzo[b]thienyl, 6-benzo[b]thienyl, 7-benzo[b]thienyl), benzo[c]thienyl(e.g., 1-benzo[c]thienyl, 4-benzo[c]thienyl, 5-benzo[c]thienyl), indazolyl (e.g., 1-indazolyl, 2-indazolyl, 3-indazolyl, 4-indazolyl, 5-indazolyl, 6-indazolyl, 7-indazolyl), benzoimidazolyl (e.g., 1-benzoimidazolyl, 2-benzoimidazolyl, 4-benzoimidazolyl, 5-benzoimidazolyl), 1,2-benzoisoxazolyl (e.g., 1,2-benzoisoxazol-3-yl, 1,2-benzoisoxazol-4-yl, 1,2-benzoisoxazol-5-yl, 1,2-benzoisoxazol-6-yl, 1,2-benzoisoxazol-7-yl), benzoxazolyl (e.g., 2-benzoxazolyl, 4-benzoxazolyl, 5-benzoxazolyl, 6-benzoxazolyl, 7-benzoxazolyl), 1,2-benzoisothiazolyl (e.g., 1,2-benzoisothiazol-3-yl, 1,2-benzoisothiazol-4-yl, 1,2-benzoisothiazol-5-yl, 1,2-benzoisothiazol-6-yl, 1,2-benzoisothiazol-7-yl), benzothiazolyl (e.g., 2-benzothiazolyl, 4-benzothiazolyl, 5-benzothiazolyl, 6-benzothiazolyl, 7-benzothiazolyl), isoquinolyl (e.g., 1-isoquinolyl, 3-isoquinolyl, 4-isoquinolyl, 5-isoquinolyl), quinolyl (e.g., 2-quinolyl, 3-quinolyl, 4-quinolyl, 5-quinolyl, 8-quinolyl), cinnolinyl (e.g., 3-cinnolinyl, 4-cinnolinyl, 5-cinnolinyl, 6-cinnolinyl, 7-cinnolinyl, 8-cinnolinyl), phthalazinyl (e.g., 1-phthalazinyl, 4-phthalazinyl, 5-phthalazinyl, 6-phthalazinyl, 7-phthalazinyl, 8-phthalazinyl), quinazolinyl (e.g., 2-quinazolinyl, 4-quinazolinyl, 5-quinazolinyl, 6-quinazolinyl, 7-quinazolinyl, 8-quinazolinyl), quinoxalinyl (e.g., 2-quinoxalinyl, 3-quinoxalinyl, 5-quinoxalinyl, 6-quinoxalinyl, 7-quinoxalinyl, 8-quinoxalinyl), pyrazolo[1,5-a]pyridyl (e.g., pyrazolo[1,5-a]pyridin-2-yl, pyrazolo[1,5-a]pyridin-3-yl, pyrazolo[1,5-a]pyridin-4-yl, pyrazolo[1,5-a]pyridin-5-yl, pyrazolo[1,5-a]pyridin-6-yl, pyrazolo[1,5-a]pyridin-7-yl), imidazo[1,2-a]pyridyl (e.g., imidazo[1,2-a]pyridin-2-yl, imidazo[1,2-a]pyridin-3-yl, imidazo[1,2-a]pyridin-5-yl, imidazo[1,2-a]pyridin-6-yl, imidazo[1,2-a]pyridin-7-yl, imidazo[1,2-a]pyridin-8-yl) unless otherwise specified.

In the present description, examples of the respective "substituents" in the "non-aromatic heterocyclic group optionally having one or more substituents" and the "heteroaryl group optionally having one or more substituents" may include a hydrocarbon group, a halo group, a nitro group, a cyano group, an oxo group, a thioxo group, a sulfo group, a sulfamoyl group, a sulfinamoyl group and a sulfenamoyl group, which optionally have one or more substituents, unless otherwise specified.

The number of those substituents may be one and within the range of the maximum substitutable number (e.g., 1, 2, 3, 4, 5, 6) .

In the present description, "poly(hydrocarbylamine)" means a polymer having the same chemical structure as a polymer formed by a virtual or actual polymerization of hydrocarbylamine (e.g., allylamine, vinylamine, ethylamine) as understood by those skilled in the art. In other words, the name may represent its chemical structure regardless of the actual raw material. As seen from this, for example poly(alkyleneimine) may have the same meaning as poly(alkylamine).

In the present description, "poly(hydrocarbylamine)" may have a chain structure [non-cyclic structure (e.g., branched-chain structure)], a cyclic structure, or a structure of a combination of one or more of them.

In particular, "poly(hydrocarbylamine)" with two or more cyclic structures may have a net structure.

In the present description, "poly(hydrocarbylamine)" has preferably one or more (more preferably 2 or more) cyclic structures (cyclic moieties).

Preferred examples of poly(hydrocarbylamines) include poly(C2-C4 alkyleneimine) and poly(C2-C4 alkylamine), and particularly preferred examples include poly(ethyleneimine), poly(allylamine) and poly(vinylamine).

One thing to note just in case is that these may have a chain structure, i.e., a non-cyclic structure (e.g., a branched-chain structure), or a cyclic structure, or a structure of a combination of one or more of them, as is the case with poly(hydrocarbylamine) .

Hereinafter the present invention will be described in more detail.

### 2. Liquid repellent

The liquid repellent of the present invention comprises a poly(hydrocarbylamine) derivative, which is poly(hydrocarbylamine) substituted by one or more substituents, wherein at least one of the substituents is a substituent on an amine nitrogen in the poly(hydrocarbylamine), and is represented by the formula:

-R^{ay}

in which R^{ay} is a hydroxyethyl group optionally having one or more substituents (at least one of the substituents is an alkyl group optionally having one or more substituents and into which one or more -O- moieties are optionally inserted, or an aryl group optionally having one or more substituents).

The "poly(hydrocarbylamine) derivative" may have a net structure with one or more side chains.

When the liquid repellent of the present invention is applied to the surface of an article, the net structure is suitably attached to the surface of the article and side chains may be aligned perpendicularly to the surface of the article.

The mechanism of the perpendicular alignment of the side chain may be suitably based on hydrophobicity of the side chain.

The function of the liquid repellent of the present invention may be based on the perpendicular alignment of the side chain although the present invention is not limited thereto.

### <Preferred embodiment of liquid repellent of the present invention>

In a preferred embodiment of the liquid repellent of the present invention, the "poly(hydrocarbylamine)" is polyethyleneimine.

In other words, the liquid repellent according to a preferred embodiment of the present invention comprises a polyethyleneimine derivative, which is polyethyleneimine substituted by one or more substituents, wherein at least one of the substituents is a substituent on an amine nitrogen in the polyethyleneimine, and is represented by the formula:

-R^{ay}

in which R^{ay} is a hydroxyethyl group optionally having one or more substituents (at least one of the substituents is an alkyl group optionally having one or more substituents and into which one or more -O- moieties are optionally inserted, or an aryl group optionally having one or more substituents).

### Polyethyleneimine derivative

In other words, the polyethyleneimine derivative may be polyethyleneimine in which at least one amine moiety is optionally substituted by one or more substituents R^{ay} and any moiety is optionally substituted by one or more substituents.

A preferred example of such polyethyleneimine derivatives includes a polyethyleneimine derivative, which is polyethyleneimine substituted by one or more substituents, wherein at least one of the substituents is a substituent on an amine nitrogen in the polyethyleneimine, and is represented by the formula:

-C₂R₄OH

in which R in each occurrence is the same or different and represents a hydrogen atom or a substituent, provided that at least one of the 4 R is:
(1) a fluoroalkyl group optionally having one or more substituents and into which one or more -O- moieties are optionally inserted;
(2) an alkyl group optionally having one or more substituents and into which one or more -O- moieties are optionally inserted; or
(3) a fluoroaryl group optionally having one or more substituents.

The molecular weight of the polyethyleneimine derivative may be in the range of preferably 300 to 1,000,000, more preferably 10,000 to 900,000, and further preferably 20,000 to 800,000.

As described above, the polyethyleneimine derivative is polyethyleneimine substituted by one or more substituents.

Polyethyleneimine, the skeleton of the polyethyleneimine derivative, may have a branched-chain or cyclic structure, or a structure of a combination thereof.

The structure may have a partial structure of a branched-chain or cyclic structure, or a structure of a combination thereof as described below, which is an example only for the purpose of illustration.

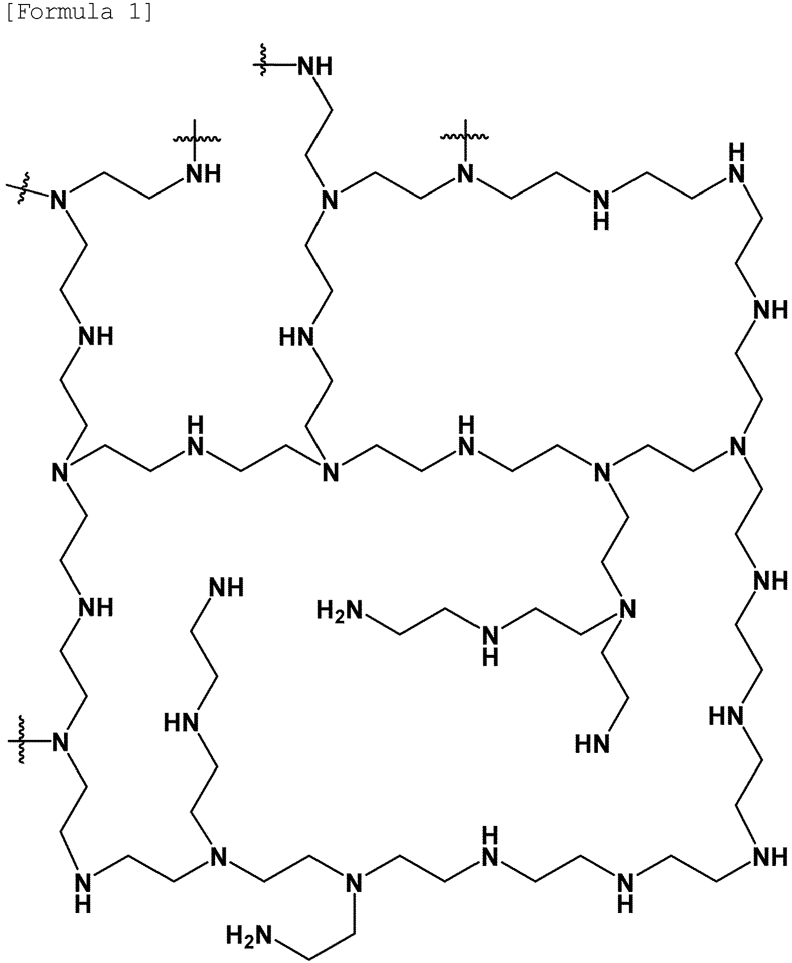

Polyethyleneimine having a branched-chain or cyclic structure, or a structure of a combination thereof as described above may be generally referred to as a branched polyethyleneimine.

The term "branched polyethyleneimine" in the present description may also be used to represent polyethyleneimine having such a structure.

The molecular weight of this polyethyleneimine may be the same as the molecular weight of the above polyethyleneimine derivative.

More specifically, the molecular weight of the polyethyleneimine may be in the range of preferably 300 to 1,000,000, more preferably 10,000 to 900,000, and further preferably 20,000 to 800,000.

The above polyethyleneimine derivative may also have a branched-chain or cyclic structure, or a structure of a combination thereof.

The structure may have a structure including one or more branched-chain moieties and one or more cyclic moieties as described below, which is an example only for the purpose of illustration. In the structural formula, R^{ay} independently represents in each occurrence -CH₂CHR^{fa}-OH, -CH₂CHR^{fa}-OH or the like.

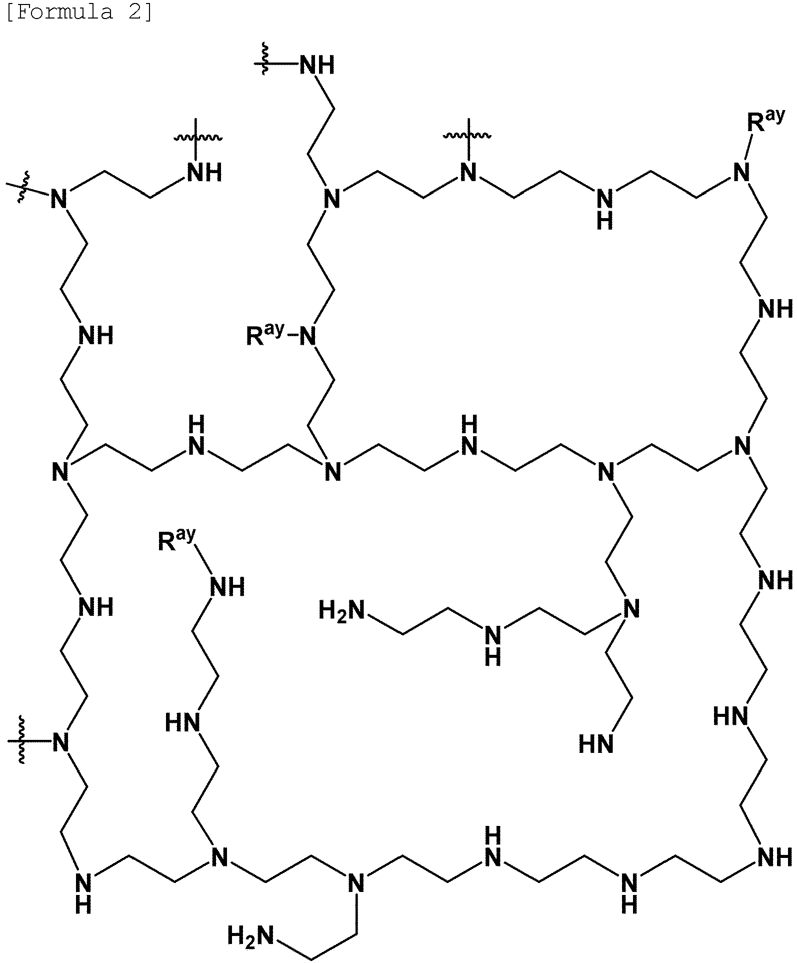

Examples of "substituents" which the above polyethyleneimine optionally has (i.e., substituents in the polyethyleneimine derivative) include a halo group; a nitro group; a cyano group; an oxo group; a thioxo group; a sulfo group; a sulfamoyl group; a sulfinamoyl group; a sulfenamoyl group; and an organic group.

The number of the substituents is one or more.

The lower limit may be, for example 5, 10, 15 or 20.

The upper limit may be, for example, 5,000, 10,000, 30,000 or 50,000.

The number of the substituents may be, for example, 0.1 to 10 times, 0.1 to 7 times, 0.1 to 5 times, or 0.1 to 3 times the number of ethyleneimines constituting the above polyethyleneimine skeleton.

As described above, at least one of the substituents is on the amine nitrogen in the polyethyleneimine and is represented by the above formula (S1):

-R^{ay}

in which the symbols are as defined above.

Examples of substituents in the "hydroxyethyl group optionally having one or more substituents" represented by R^{ay} include a (halo)alkyl group, a halo group (e.g., a fluoro group), an amino group, a nitro group, a cyano group, a hydroxy group, an oxo group, a formyl group, a hydroxycarbonyl group, a thioxo group, a sulfo group, a sulfamoyl group, a sulfinamoyl group and a sulfenamoyl group, which optionally have one or more ether functional groups (-O-).

The number of the substituents is 0 (no substitution), 1, 2, 3 or 4.

At least one of the substituents is R^{fa}. The number thereof may be 1, 2, 3 or 4.

As described above, R^{fa} is an alkyl group optionally having one or more substituents and into which one or more -O-moieties are optionally inserted, or an aryl group optionally having one or more substituents.

The alkyl group in R^{fa} is preferably a C1-C30 alkyl group, more preferably a C6-C20 alkyl group, and further preferably a C12-C20 alkyl group.

The alkyl group in R^{fa}, the "alkyl group optionally having one or more substituents," is preferably C1-C30 alkyl groups (particularly preferably straight-chain or branched-chain C1-C30 alkyl groups), more preferably C6-C30 alkyl groups (particularly preferably straight-chain or branched-chain C6-C30 alkyl groups), more preferably C6-C20 alkyl groups (particularly preferably straight-chain or branched-chain C6-C20 alkyl groups), and further preferably C12-C20 alkyl groups (particularly preferably straight-chain or branched-chain C12-C20 alkyl groups).

Examples of the substituents which the above alkyl group optionally has include a (halo)alkyl group, a halo group (e.g., a fluoro group), an amino group, a nitro group, a cyano group, a hydroxy group, an oxo group, a formyl group, a hydroxycarbonyl group, a thioxo group, a sulfo group, a sulfamoyl group, a sulfinamoyl group and a sulfenamoyl group, which optionally have one or more ether functional groups (-O-).

Preferred examples of aryl groups in R^{fa}, the "aryl group optionally having one or more substituents," include a phenyl group.

Examples of the substituents which the above aryl group optionally has include a (halo)alkyl group, a halo group (e.g., a fluoro group), an amino group, a nitro group, a cyano group, a hydroxy group, an oxo group, a formyl group, a hydroxycarbonyl group, a thioxo group, a sulfo group, a sulfamoyl group, a sulfinamoyl group and a sulfenamoyl group, which optionally have one or more ether functional groups (-O-).

R^{fa} is preferably a fluoroalkyl group optionally having one or more ether functional groups (-O-), more preferably a straight-chain C1-C30 fluoroalkyl group optionally having one or more (preferably one) ether functional groups (-O-), and further preferably a straight-chain C6-C20 perfluoroalkyl group having one or more (preferably one) ether functional groups (-O-).

The molar ratio of N-R^{ay} moieties/ all ethyleneimine units in the polyethyleneimine derivative may be in the range of preferably 0.01 to 2, more preferably 0.01 to 1.5, and further preferably 0.01 to 1.

The molar ratio of R^{fa} moieties/ N-R^{ay} moieties in the polyethyleneimine derivative is in the range of preferably 1/4 to 1, more preferably 1/3 to 1, and further preferably 1/2 to 1.

R^{ay} is preferably a 2-hydroxyethyl group optionally having one or more substituents (at least one of the substituents is R^{fa}).

The polyethyleneimine derivative is preferably a poly(hydrocarbylamine) derivative having one or more constituent units represented by formula (U1):

-CH₂CH₂-N(-R^{ay})- (U1)

in which the symbols are as defined above.

In the present description, the polyethyleneimine derivative having one or more constituent units (U1) may be referred to as polyethyleneimine derivative (PU1).

The polyethyleneimine derivative is preferably includes: ne terminal groups E, np constituent units G^{p}, nqf constituent units G^{qf} and nr constituent units G^{r}.

Specific examples of terminal groups E include -NH₂,-CH₃ and -C₂H₅. The terminal group may have one or more of the above substituents.

ne is in the range of preferably 0 to 50,000, more preferably 0 to 40,000, and further preferably 0 to 30,000.

Although this is only for the purpose of illustration, when ne is 0, the polyethyleneimine derivative has a cyclic structure and has no branches except for substituents of the respective constituent units described later as seen from common general knowledge.

The constituent units G^{p} in each occurrence are the same or different, and constituent units represented by formula (Up1) :

-CH₂CH₂-NH- (Up1) .

np, the number of the constituent units G^{p}, is in the range of preferably 0 to 50,000, more preferably 0 to 40,000, and further preferably 0 to 30,000.

The constituent units G^{qf} in each occurrence are the same or different, and constituent units represented by formula (Uq1) :

-CH₂CH₂-N(-R^{qfy})- (Uq1)

in which R^{qfy} represents a hydroxyethyl group optionally having one or more substituents (at least one of the substituents is an alkyl group optionally having one or more substituents and into which one or more -O- moieties are optionally inserted, or an aryl group optionally having one or more substituents.)

R^{qfy} is preferably a hydroxyethyl group optionally having one or more substituents [at least one of the substituents is:
(1) a fluoroalkyl group optionally having one or more substituents and into which one or more -O- moieties are optionally inserted;
(2) an alkyl group optionally having one or more substituents and into which one or more -O- moieties are optionally inserted; or
(3) a fluoroaryl group optionally having one or more substituents.

R^{qfy} is more preferably a hydroxyethyl group optionally having one or more substituents (at least one of the substituents is a perfluoroalkyl group).

nqf, the number of the constituent units G^{qf}, is in the range of preferably 0 to 50,000, more preferably 0 to 40,000, and further preferably 0 to 30,000.

The constituent units G^{r} in each occurrence are the same or different, and constituent units represented by formula (Ur1) :

-CH₂CH₂-N(-R^{ot})- (Ur1)

in which R^{ot} represents a substituent different from R^{qfy}.

nr, the number of the constituent units G^{r}, is in the range of preferably 0 to 50,000, more preferably 0 to 40,000, and further preferably 0 to 30,000.

The sum of np and nqf is in the range of preferably 100 or more, more preferably 100 to 100,000, and further preferably 1,000 to 100,000.

The ratio nqf / (np + nqf) is in the range of preferably 0.02 to 100%, more preferably 0.1 to 100%, and further preferably 1 to 100%.

The constituent units G^{p}, G^{qf} and G^{r} are bonded in an optional form, and the constituent units G^{p}, G^{qf} and G^{r} are optionally linked to another constituent unit at a moiety not constituting the main chain.

Examples of such forms include a random form, a block form, an alternating form and a combination thereof.

The liquid repellent of the present invention may also contain an additive, a solvent and the like if necessary, in addition to the polyethyleneimine derivative (PU1).

An additive usually used in liquid repellent may be used as the additive.

Examples of such solvents include water; alcohol solvents [e.g., methanol, ethanol]; non-aromatic hydrocarbon solvents [e.g., pentane, hexane, heptane, octane, cyclohexane, decahydronaphthalene, n-decane, isododecane, tridecane]; aromatic hydrocarbon solvents [e.g., benzene, toluene, xylene, tetralin, veratrole, diethylbenzene, methylnaphthalene, nitrobenzene, o-nitrotoluene, mesitylene, indene, diphenylsulfide]; ketone solvents [e.g., acetone, methyl ethyl ketone (MEK), methyl isobutyl ketone, acetophenone, propiophenone, diisobutyl ketone, isophorone]; halogenated hydrocarbon solvents [e.g., dichloromethane, chloroform, chlorobenzene]; ether solvents [e.g., diethyl ether, tetrahydrofuran (THF), diisopropyl ether, methyl-t-butyl ether (MTBE), dioxane, dimethoxyethane, diglyme, phenetol, 1,1-dimethoxycyclohexane, diisoamyl ether]; ester solvents [e.g., ethyl acetate, isopropyl acetate, diethyl malonate, 3-methoxy-3-methylbutyl acetate, γ-butyrolactone, ethylene carbonate, propylene carbonate, dimethyl carbonate, α-acetyl-γ-butyrolactone]; nitrile solvents [e.g., acetonitrile, benzonitrile]; sulfoxide solvents [e.g., dimethyl sulfoxide, sulfolane]; and amide solvents [e.g., N,N-dimethylformamide, N,N-dimethylacetamide, N-methylpyrrolidone, 1,3-dimethyl-2-imidazolidinone, N,N-dimethylacrylamide, N,N-dimethylacetoacetamide, N,N-diethylformamide, N,N-diethylacetamide].

One of these solvents may be used singly or two or more of them may be used in combination.

### 3. Method for producing liquid repellent

The liquid repellent of the present invention is produced by, for example, mixing the above poly(hydrocarbylamine) derivative with the above desired additive and the desired solvent.

The poly(hydrocarbylamine) derivative is commercially available, or may be produced by the method for producing a polyethyleneimine derivative of the present invention described later, or a method similar to it.

The liquid repellent of the present invention in which the above poly(hydrocarbylamine) derivative is the polyethyleneimine derivative (PU1) is produced by, for example, mixing the polyethyleneimine derivative (PU1) with the desired additive and the desired solvent.

The poly(hydrocarbylamine) derivative is commercially available, or may be produced by the method for producing a polyethyleneimine derivative of the present invention described later, or a method similar to it.

More specifically, for example, a cyclic hydrocarbon amine corresponding to the structure of the target poly(hydrocarbylamine) [e.g., propyleneimine corresponding to the target polypropyleneimine] may be used instead of ethyleneimine in the production of polyethyleneimine.

### 4. Use of liquid repellent

The liquid repellent of the present invention may be applied to the surface of an article (e.g., the surface is coated therewith) to be used in a wide range of applications of imparting liquid repellency to the surface of the articles.

In the present description, "imparting liquid repellency" may mean imparting antifouling properties.

In the present description, "imparting liquid repellency to the surface of an article" may mean to improve liquid repellency on the surface of the article.

Details of the "use of liquid repellent" will be understood from descriptions in other parts of the present invention and common general knowledge.

The liquid repellent of the present invention is applied to the surface of an article to impart liquid repellency thereto.

As described above, the material of the surface of articles is not limited, and examples thereof include glass, metal and resin.

The liquid repellent of the present invention is applied to the surface of an article in such an amount that the amount of polyethyleneimine derivative is preferably 1 to 1,000 mg, more preferably 10 to 1,000 mg, and further preferably 50 to 1,000 mg per 1 cm² of the surface of an article.

### 5. Liquid repellent membrane

The present invention also provides a liquid repellent membrane comprising the liquid repellent of the present invention.

The present invention also provides a liquid repellent membrane comprising the poly(hydrocarbylamine) derivative.

The present invention also provides a liquid repellent membrane formed of the liquid repellent of the present invention.

The present invention also provides a liquid repellent membrane formed of the poly(hydrocarbylamine) derivative.

The liquid repellent membrane of the present invention may be a solidified product of the liquid repellent of the present invention.

The thickness of the liquid repellent membrane of the present invention may be, for example, in the range of preferably 0.0001 to 5 µm, more preferably 0.0001 to 4 µm, and further preferably 0.0001 to 3 µm.

The liquid repellent membrane of the present invention comprises the poly(hydrocarbylamine) derivative, preferably the polyethyleneimine derivative (PU1) of the above formula.

The liquid repellent membrane of the present invention will be understood based on the description of the liquid repellent of the present invention.

The liquid repellent membrane of the present invention preferably has high crystallinity.

### 6. Methods for producing liquid repellent membrane

### (1) Method 1 for producing liquid repellent membrane

The liquid repellent membrane of the present invention may be produced by a method comprising:
1) coating a surface of an article with a liquid comprising polyethyleneimine;
2) further coating the surface with a liquid comprising oxirane optionally having one or more substituents (at least one of the substituents is R^{fa}) (hereinafter this may be simply referred to as an oxirane compound), and reacting at least part thereof to form the liquid repellent membrane.

### Step 1

The "liquid comprising polyethyleneimine" may be a liquid comprising polyethyleneimine and a solvent.

Examples of such solvents may include water; alcohol solvents [e.g., methanol, ethanol]; non-aromatic hydrocarbon solvents [e.g., pentane, hexane, heptane, octane, cyclohexane, decahydronaphthalene, n-decane, isododecane, tridecane]; aromatic hydrocarbon solvents [e.g., benzene, toluene, xylene, tetralin, veratrole, diethylbenzene, methylnaphthalene, nitrobenzene, o-nitrotoluene, mesitylene, indene, diphenylsulfide]; ketone solvents [e.g., acetone, methyl ethyl ketone (MEK), methyl isobutyl ketone, acetophenone, propiophenone, diisobutyl ketone, isophorone]; halogenated hydrocarbon solvent [e.g., dichloromethane, chloroform, chlorobenzene]; ether solvents [e.g., diethyl ether, tetrahydrofuran (THF), diisopropyl ether, methyl-t-butyl ether (MTBE), dioxane, dimethoxyethane, diglyme, phenetol, 1,1-dimethoxycyclohexane, diisoamyl ether]; ester solvents [e.g., ethyl acetate, isopropyl acetate, diethyl malonate, 3-methoxy-3-methylbutyl acetate, γ-butyrolactone, ethylene carbonate, propylene carbonate, dimethyl carbonate, α-acetyl-γ-butyrolactone]; nitrile solvents [e.g., acetonitrile, benzonitrile]; sulfoxide solvents [e.g., dimethyl sulfoxide, sulfolane]; and amide solvents [e.g., N,N-dimethylformamide, N,N-dimethylacetamide, N-methylpyrrolidone, 1,3-dimethyl-2-imidazolidinone, N,N-dimethylacrylamide, N,N-dimethylacetoacetamide, N,N-diethylformamide, N,N-diethylacetamide].

One of these solvents may be used singly or two or more of them may be used in combination.

The liquid may include a substance in addition to polyethyleneimine and solvent as desired.

Examples of those substances include aziridine optionally having one or more substituents, oxazoline optionally having one or more substituents, and halogenated alkyl.

Preferred examples of such substituents include an alkyl group and an aryl group.

This polyethyleneimine has a mass average molecular weight of preferably 300 to 1,000,000, more preferably 300 to 900,000, and further preferably 300 to 800,000.

The concentration of polyethyleneimine in the liquid may be, for example, in the range of 1 to 50% by mass.

Preferred examples of oxirane compounds above include an oxirane compound represented by formula (A): 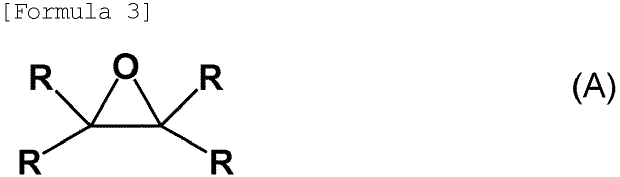 in which R in each occurrence is the same or different and represents a hydrogen atom or R^{fa}, and at least one of the 4 R is R^{fa}.

More preferred examples of these oxirane compounds include an oxirane compound represented by formula (A^{f}) described later.

Polyethyleneimine is commercially available, or may be produced by a known method.

More specifically, polyethyleneimine may be produced by, for example, ring open polymerization of ethyleneimine in an aqueous solvent (e.g., water) in the presence of an acid catalyst such as hydrochloric acid or sulfuric acid.

The method of coating the surface to which liquid repellency is imparted (hereinafter may be referred to as the surface of application) with a liquid containing polyethyleneimine in step 1 is not limited as long as this coating can be done. Examples thereof include a spin coating method, a wipe coating method, a spray coating method, a squeezee coating method, a dip coating method, a die coating method, an inkjet method, a flow coating method, a roll coating method, a casting method, a Langmuir-Blodgett method and a gravure coating method.

The material of the surface to which water repellency is imparted is not limited, and examples thereof include metal and resin.

The surface is coated with the liquid so that the amount of polyethyleneimine is preferably 1 to 1,000 mg, more preferably 10 to 1,000 mg, and further preferably 50 to 1,000 mg per 1 cm² of the surface of application.

This coating may be performed at, for example, room temperature.

Upon this coating at least part of poly(hydrocarbylamine) and oxirane optionally having one or more substituents (at least one of the substituents is an alkyl group optionally having one or more substituents and into which one or more -O- moieties are optionally inserted, or an aryl group optionally having one or more substituents) are reacted to form the liquid repellent membrane of the present invention.

### Step 2

The liquid containing the oxirane may be a liquid containing the oxirane and a solvent.

Examples of such solvents may include water; alcohol solvents [e.g., methanol, ethanol]; non-aromatic hydrocarbon solvents [e.g., pentane, hexane, heptane, octane, cyclohexane, decahydronaphthalene, n-decane, isododecane, tridecane]; aromatic hydrocarbon solvents [e.g., benzene, toluene, xylene, tetralin, veratrole, diethylbenzene, methylnaphthalene, nitrobenzene, o-nitrotoluene, mesitylene, indene, diphenylsulfide]; ketone solvents [e.g., acetone, methyl ethyl ketone (MEK), methyl isobutyl ketone, acetophenone, propiophenone, diisobutyl ketone, isophorone]; halogenated hydrocarbon solvent [e.g., dichloromethane, chloroform, chlorobenzene]; ether solvents [e.g., diethyl ether, tetrahydrofuran (THF), diisopropyl ether, methyl-t-butyl ether (MTBE), dioxane, dimethoxyethane, diglyme, phenetol, 1,1-dimethoxycyclohexane, diisoamyl ether]; ester solvents [e.g., ethyl acetate, isopropyl acetate, diethyl malonate, 3-methoxy-3-methylbutyl acetate, γ-butyrolactone, ethylene carbonate, propylene carbonate, dimethyl carbonate, α-acetyl-γ-butyrolactone]; nitrile solvents [e.g., acetonitrile, benzonitrile]; sulfoxide solvents [e.g., dimethyl sulfoxide, sulfolane]; and amide solvents [e.g., N,N-dimethylformamide, N,N-dimethylacetamide, N-methylpyrrolidone, 1,3-dimethyl-2-imidazolidinone, N,N-dimethylacrylamide, N,N-dimethylacetoacetamide, N,N-diethylformamide, N,N-diethylacetamide].

One of these solvents may be used singly or two or more of them may be used in combination. The liquid may include a substance in addition to the oxirane and solvent as desired.

Examples of those substances include aziridine optionally having one or more substituents, oxazoline optionally having one or more substituents, and halogenated alkyl.

Preferred examples of such substituents include an alkyl group and an aryl group.

In Step 2, the coating layer formed in the above Step 1 is coated with a liquid containing the oxirane. The method of coating is not limited as long as this coating can be done. Examples thereof include a spin coating method, a wipe coating method, a spray coating method, a squeezee coating method, a dip coating method, a die coating method, an inkjet method, a flow coating method, a roll coating method, a casting method, a Langmuir-Blodgett method and a gravure coating method.

The surface is coated with the liquid so that the amount of oxirane is preferably 1 to 1,000 mg, more preferably 10 to 1,000 mg, and further preferably 50 to 1,000 mg per 1 cm² of the target surface of application.

This coating may be performed at, for example, room temperature.

Upon this coating at least part of poly(hydrocarbylamine) and oxirane optionally having one or more substituents (at least one of the substituents is an alkyl group optionally having one or more substituents and into which one or more -O- moieties are optionally inserted, or an aryl group optionally having one or more substituents) are reacted to form the liquid repellent membrane of the present invention.

After this coating, preferably a heating treatment may be performed.

This heating treatment allows the liquid repellent membrane to be adhered to the surface of application and makes the structure stable.

The temperature of the heating treatment may be in the range of preferably 20 to 200°C, more preferably 20 to 80°C, and further preferably 20 to 150°C.

The time of the heating treatment may be in the range of preferably 5 to 3,000 minutes, more preferably 10 to 2,000 minutes, and further preferably 15 to 1,000 minutes.

The solvent that the liquid may contain may be removed, for example by reducing pressure, heating or by means of combination thereof, as necessary.

The liquid repellent membrane formed as described above may be washed with a solvent (e.g., THF) and dried, for example, under reduced pressure, as necessary.

### (2) Method 2 for producing liquid repellent membrane

The liquid repellent membrane of the present invention may be produced by another method, for example, a method comprising coating the surface of application with a liquid comprising polyethyleneimine and oxirane optionally having one or more substituents (at least one of the substituents is an alkyl group optionally having one or more substituents and into which one or more -O- moieties are optionally inserted, or an aryl group optionally having one or more substituents); and reacting at least part thereof to form the liquid repellent membrane.

The polyethyleneimine and the oxirane may be the same as those described in Method 1 for producing liquid repellent membrane.

In Step 2, the coating layer formed in the above Step 1 is coated with a liquid containing the oxirane. The method of coating is not limited as long as this coating can be done. Examples thereof include a spin coating method, a wipe coating method, a spray coating method, a squeezee coating method, a dip coating method, a die coating method, an inkjet method, a flow coating method, a roll coating method, a casting method, a Langmuir-Blodgett method and a gravure coating method.

For the molar ratio of the polyethyleneimine and the oxirane in the liquid, the mass ratio is preferably 1:1 to 1:10, more preferably 1:1 to 1:7, and further preferably 1:1 to 1:5

The surface is coated with the liquid so that the amount of polyethyleneimine is preferably 1 to 1,000 mg, more preferably 10 to 1,000 mg, and further preferably 50 to 1,000 mg per 1 cm² of the surface of application.

The surface is coated with the liquid so that the amount of oxirane is preferably 1 to 3,000 mg, more preferably 10 to 3,000 mg, and further preferably 50 to 3,000 mg per 1 cm² of the surface of application.

This coating may be performed at, for example, room temperature.

Upon this coating at least part of polyethyleneimine and oxirane optionally having one or more substituents (at least one of the substituents is an alkyl group optionally having one or more substituents and into which one or more -O- moieties are optionally inserted, or an aryl group optionally having one or more substituents) are reacted to form the liquid repellent membrane of the present invention.

After this coating, preferably a heating treatment may be performed.

This heating treatment allows the liquid repellent membrane to be adhered to the surface of application and makes the structure stable.

The temperature of the heating treatment may be in the range of preferably 20 to 200°C, more preferably 20 to 180°C, and further preferably 20 to 150°C.

The time of the heating treatment may be in the range of preferably 5 to 3,000 minutes, more preferably 10 to 2,000 minutes, and further preferably 15 to 1,000 minutes.

The solvent that the liquid may contain may be removed, for example by reducing pressure, heating or by means of combination thereof, as necessary.

The liquid repellent membrane formed as described above may be washed with a solvent (e.g., THF) and dried, for example, under reduced pressure, as necessary.

### 7. Article

The article (liquid repellent article) according to the present invention has the liquid repellent membrane of the present invention.

The article according to the present invention may have the liquid repellent membrane of the present invention at one or more portions, or on the entire surface.

The liquid repellent membrane of the present invention in the article and the method for producing the same will be understood from the description of the liquid repellent membrane of the present invention.

The article according to the present invention and the method for producing the same will be understood from the description thereof and common general knowledge.

The liquid repellent article has its original function and also has been provided with liquid repellency.

The thickness of the liquid repellent membrane of the present invention formed on the surface of application may be in the range of, for example, 0.0001 to 5 µm, 0.0001 to 4 µm, or 0.0001 to 3 µm.

### 8. Polyethyleneimine derivative

Of the polyethyleneimine derivatives in the liquid repellent of the present invention, a polyethyleneimine derivative, which is polyethyleneimine substituted by one or more substituents, wherein at least one of the substituents is a substituent on an amine nitrogen in the polyethyleneimine, and is represented by the formula:

-R^{fy}

in which R^{fy} is a hydroxyethyl group optionally having one or more substituents (at least one of the substituents is:
(1) a fluoroalkyl group optionally having one or more substituents and into which one or more -O- moieties are optionally inserted;
(2) an alkyl group optionally having one or more substituents and into which one or more -O- moieties are optionally inserted; or
(3) a fluoroaryl group optionally having one or more substituents, is a novel compound.

The present invention also provides the above novel compound.

The polyethyleneimine derivative may be produced by reacting, for example polyethyleneimine with an oxirane compound.

The oxirane compound is preferably an oxirane compound represented by formula (A^{f}): 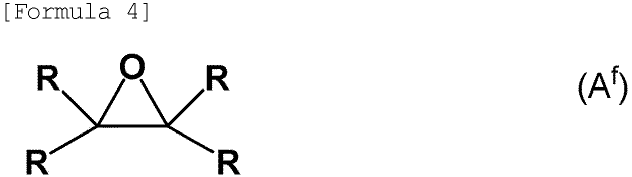 in which R in each occurrence is the same or different and represents a hydrogen atom or a substituent, provided that at least one of the 4 R may be a fluoroalkyl group.

Preferably, R in each occurrence is the same or different and represents a hydrogen atom, an alkyl group optionally having one or more substituents and into which one or more -O- moieties are optionally inserted, or an aryl group optionally having one or more substituents, provided that at least one of the 4 R is a fluoroalkyl group optionally having one or more substituents and into which one or more -O- moieties are optionally inserted, or a fluoroaryl group optionally having one or more substituents.

More preferably, R in each occurrence is the same or different and represents a hydrogen atom, an alkyl group having 1 to 30 carbon atoms (preferably 6 to 20, and more preferably 12 to 20 carbon atoms), or an aryl group having 6 to 14 carbon atoms, provided that at least one of the 4 R is a fluoroalkyl group having 1 to 30 carbon atoms (preferably 6 to 20, and more preferably 12 to 20 carbon atoms) and optionally having one or more substituents and into which one or more -O- moieties are optionally inserted, or a fluoroaryl group optionally having one or more substituents.

The temperature of the above reaction may be in the range of preferably 20 to 200°C, more preferably 20 to 180°C, and further preferably 20 to 150°C.

The time of the above reaction may be in the range of preferably 5 to 3,000 minutes, more preferably 10 to 2,000 minutes, and further preferably 15 to 1,000 minutes.

The above Methods 1 and 2 for producing liquid repellent membrane may each be an embodiment of the method for producing a polyethyleneimine derivative.

The polyethyleneimine derivative has a hydroxyl value in the range of preferably 1 to 100, more preferably 1 to 80, and further preferably 1 to 60.

The polyethyleneimine derivative has an amine value in the range of preferably 1 to 50, more preferably 1 to 40, and further preferably 1 to 30.

The polyethyleneimine derivative has a fluorine content in the range of preferably 0 to 80, more preferably 0 to 70, and further preferably 0 to 60.

The polyethyleneimine derivative has a mass average molecular weight in the range of preferably 300 to 1,000,000, more preferably 300 to 900,000, and further preferably 300 to 800,000.

The polyethyleneimine derivative has a hydroxyl value in the range of preferably 1 to 100, more preferably 1 to 80, and further preferably 1 to 60; an amine value in the range of preferably 1 to 50, more preferably 1 to 40, and further preferably 1 to 30; a fluorine content in the range of preferably 0 to 80, more preferably 0 to 70, and further preferably 0 to 60; and a mass average molecular weight in the range of preferably 300 to 1,000,000, more preferably 300 to 900,000, and further preferably 300 to 800,000.

The above embodiment of the liquid repellent of the present invention may be a liquid repellent comprising the polyethyleneimine derivative of the present invention.

### 10. Liquid repellent kit

The present invention also provides a kit of a liquid repellent comprising:
1) polyethyleneimine; and
2) oxirane optionally having one or more substituents (at least one of the substituents is an alkyl group optionally having one or more substituents).

The kit preferably includes the polyethyleneimine 1 and the oxirane 2 in the form in which the two are not brought into contact with each other.

Examples of such forms include a form in which each of the polyethyleneimine 1 and the oxirane 2 is in a different container.

The kit, the method for producing the same, and the method for using the same will be understood from the description of the liquid repellent and the liquid repellent membrane, and common general knowledge in the technical field to which the present invention pertains.

### Examples

Hereinafter, the present invention will be described in more detail with reference to Examples, but the present invention is not limited thereto.

The meaning of symbols and abbreviations in Examples will be described below.

### PEI: Polyethyleneimine

The epoxy derivative (Ex1) used in Production Examples 1-1 and 1-2 below is

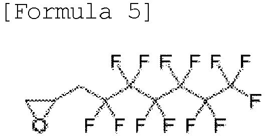

The epoxy derivative (Ex2) used in Production Examples 2-1 and 2-2 below is

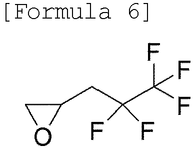

### Production Example 1-1 Preparation of PEI-Ex1 thin film 1

0.1 ml of a 15 wt% aqueous solution of branched polyethyleneimine having a number average molecular weight of 0.75 × 10⁶ was applied to a glass substrate by spin coating (2,500 rpm, 100 sec) to prepare a PEI thin film.

0.03 ml of a methanol solution of an epoxy derivative (Ex1) was dropped on the PEI thin film and a cover glass was put thereon.

This was heated at 120°C for 30 minutes.

The same was left at room temperature to cool it to room temperature, and the cover glass was removed and the thin film was washed with THF. The film was dried under reduced pressure to give a PEI-Ex1 thin film (film thickness: 10 nm or less).

### Production Example 1-2 Preparation of PEI-Ex1 thin film 2

A 15 wt% aqueous solution of branched polyethyleneimine having a number average molecular weight of 0.75 × 10⁶ was reacted with a methanol solution of an epoxy derivative (Ex1) at 80°C for 12 hours.

The solvent was distilled off using an evaporator and the resultant was dried under reduced pressure to give PEI-Ex1.

The PEI-Ex1 was dissolved in methanol and 0.1 ml of the solution (10 wt%) was applied to a glass substrate by spin coating (2,500 rpm, 100 sec) to prepare a PEI-Ex1 thin film.

The thin film was washed with THF and dried under reduced pressure to give a PEI-Ex1 thin film (film thickness: 10 nm or less).

### Production Example 2-1 Preparation of PEI-Ex2 thin film 1

0.1 ml of a 15 wt% aqueous solution of branched polyethyleneimine having a number average molecular weight of 0.75 × 10⁶ was applied to a glass substrate by spin coating (2,500 rpm, 100 sec) to prepare a PEI thin film.

0.03 ml of a methanol solution of an epoxy derivative (Ex2) was dropped on the PEI thin film and a cover glass was put thereon.

This was heated at 120°C for 30 minutes.

The same was left at room temperature to cool it to room temperature, and the cover glass was removed and the thin film was washed with THF. The film was dried under reduced pressure to give a PEI-Ex2 thin film (film thickness: 10 nm or less).

### Production Example 2-2 Preparation of PEI-Ex2 thin film 2

A 15 wt% aqueous solution of branched polyethyleneimine having a number average molecular weight of 0.75 × 10⁶ was reacted with a methanol solution of an epoxy derivative (Ex) at 80°C for 12 hours.

The solvent was distilled off using an evaporator and the resultant was dried under reduced pressure to give PEI-Ex2.

The PEI-Ex2 was dissolved in methanol and 0.1 ml of the solution (10 wt%) was applied to a glass substrate by spin coating (2,500 rpm, 100 sec) to prepare a PEI-Ex2 thin film.

The thin film was washed with THF and dried under reduced pressure to give a PEI-Ex2 thin film (film thickness: 10 nm or less).

### Production Example 3

Thin films were produced by the method of the above Production Example 1-1 or 2-1 using the respective compounds described in the column "Reacted Ex" in Table 1 below.

### Production Example 4

Thin films were produced by the method of the above Production Example 1-2 or 2-2 using the respective compounds described in the column "Reacted Ex" in Table 2 below.

### Test Example 1 Liquid repellency test

A liquid repellency test of the PEI-Ex2 thin films produced above was performed by the following method. The results are shown in Table 1 and Table 2.

### <Conditions>

Apparatus: Contact angle meter (manufactured by Excimer Inc.)

### (Settings)

Temperature: 25°C

### Droplet

Water: 1.6 µl
n-octane: 1.6 µl

**[Table 1]**

| Reacted Ex | | Contact angle for water /° | | | Average | Min. | Max, | S.D, |
|---|---|---|---|---|---|---|---|---|
| | | 1 | 2 | 3 | | | | |
| E1430 | 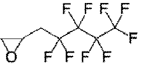 | 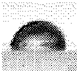 | 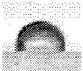 | 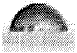 | 89.2 | 80.4 | 96.2 | 8.1 |
| | | 91.1 | 96.2 | 80.4 | | | | |
| E1630 | 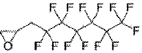 | 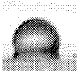 | 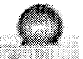 | 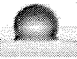 | 125.4 | 121.4 | 133.4 | 6.9 |
| | | 121.4 | 133.4 | 121.4 | | | | |
| E5244 | 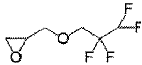 | 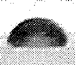 | 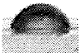 | 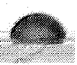 | 84.6 | 84.0 | 85.0 | 0.6 |
| | | 85.0 | 84.0 | 84.9 | | | | |
| E5444 | 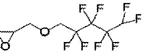 | 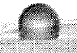 | 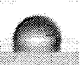 | 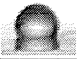 | 116.8 | 112.5 | 123.9 | 6.2 |
| | | 112.5 | 114.0 | 123.9 | | | | |
| E5644 | 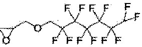 | 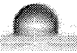 | 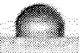 | 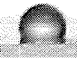 | 112.8 | 109.6 | 117.8 | 4.4 |
| | | 111.0 | 109.6 | 117.8 | | | | |
| E7432 | 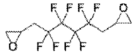 | 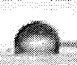 | 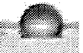 | 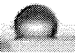 | 119.6 | 115.7 | 122.4 | 3.5 |
| | | 115.7 | 122.4 | 120.8 | | | | |
| E7632 | 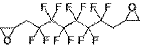 | 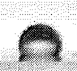 | 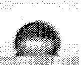 | 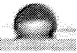 | 123.5 | 120.7 | 125.6 | 2.5 |
| | | 120.7 | 124.1 | 125.6 | | | | |
| C6 | 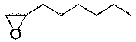 | 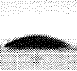 | 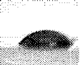 | 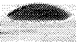 | 50.0 | 42.7 | 63.9 | 12.0 |
| | | 42.7 | 63.9 | 43.4 | | | | |
| C12 | 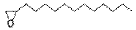 | 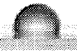 | 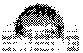 | 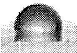 | 110.5 | 110.2 | 111.0 | 0.4 |
| | | 110.4 | 110.2 | 111.0 | | | | |

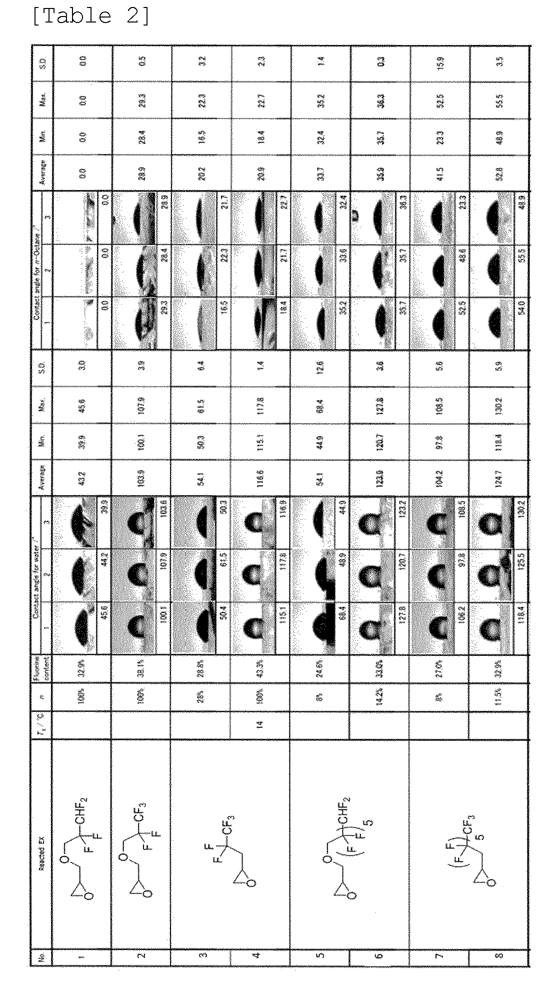

### Test Example 2 Measurement of glass transition temperature

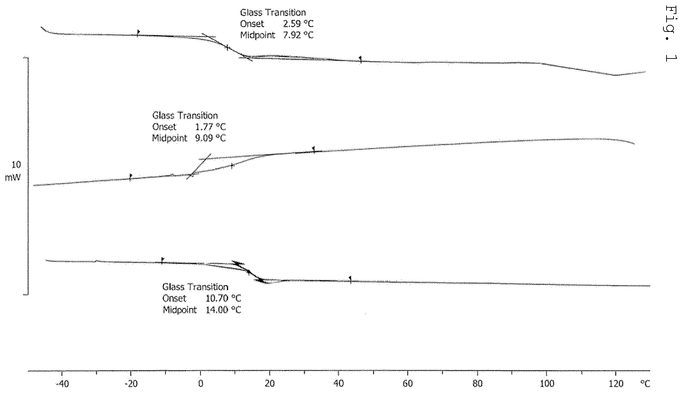

The glass transition temperature of the PEI-Ex2 thin films produced in the above Example 2-1 was measured by differential scanning calorimetry in the following conditions. The DSC thermogram is shown in Fig. 1 (first temperature increase, temperature decrease, and second temperature increase from the above).

The results show that PEI-Ex2 thin films have high crystallinity.

### <Conditions>

Apparatus: Mettler Toledo DSC 1
Method: Heat flow method

### (Settings)

First temperature-increasing rate: 10°C/ minute
Temperature decreasing rate: 10°C/ minute
Second temperature-increasing rate: 10°C/ minute

### Test Example 3 Analysis of thin film by FT-IR

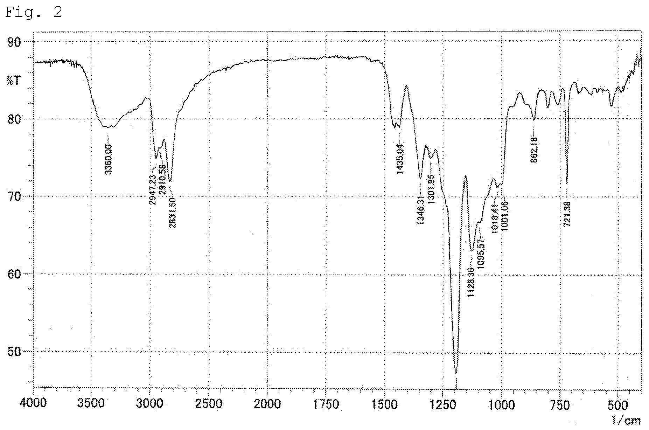

The PEI-Ex2 thin films produced in the above Example 2-1 were analyzed by FT-IR in the following conditions. The IR spectrum is shown in Fig. 2.

The results show the presence of amino groups and hydroxy groups.

### <Conditions>

Apparatus: SHIMADZU IR Affinity-1
Method: Film method

### (Settings)

400 to 4,000 cm⁻¹
Resolution: 4 cm-1

### Test Example 4 Analysis of thin film by H-NMR

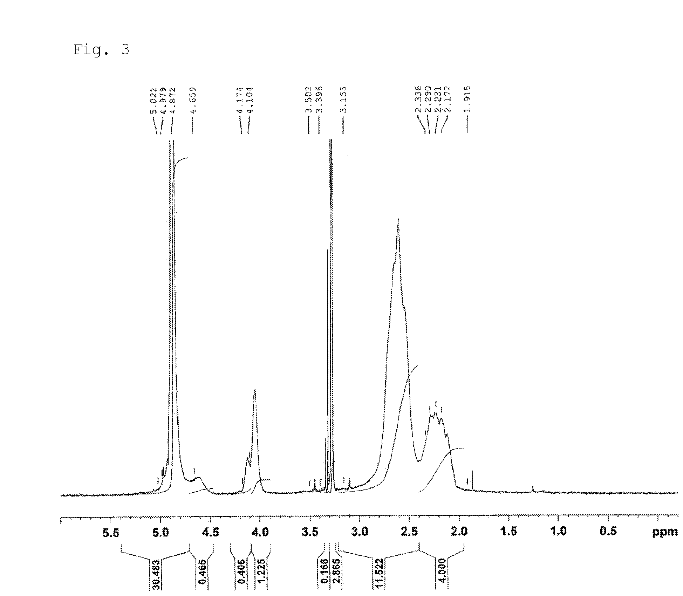

The PEI-Ex2 thin films produced in the above Example 2-1 were analyzed by FT-IR in the following conditions. The IR spectrum is shown in Fig. 3.

The results show the presence of H atoms in a few different environments.

### <Conditions>

Apparatus: Bruker AV400 (400 MHz)
Method: using deuterated methanol as a deuterated solvent

## Claims

1. A liquid repellent comprising a poly(hydrocarbylamine) derivative, which is poly(hydrocarbylamine) substituted by one or more substituents, wherein at least one of the substituents is a substituent on an amine nitrogen in the poly(hydrocarbylamine), and is represented by the formula:
-R^{ay}
in which R^{ay} is a hydroxyethyl group optionally having one or more substituents (at least one of the substituents is an alkyl group optionally having one or more substituents and into which one or more -O- moieties are optionally inserted, or an aryl group optionally having one or more substituents).

2. The liquid repellent according to claim 1, wherein the poly(hydrocarbylamine) derivative is a polyethyleneimine derivative, which is polyethyleneimine substituted by one or more substituents, wherein at least one of the substituents is a substituent on an amine nitrogen in the polyethyleneimine, and is represented by the formula:
-R^{ay}
in which R^{ay} is a hydroxyethyl group optionally having one or more substituents (at least one of the substituents is an alkyl group optionally having one or more substituents and into which one or more -O- moieties are optionally inserted, or an aryl group optionally having one or more substituents).

3. The liquid repellent according to claim 1 or 2, wherein the poly(hydrocarbylamine) derivative has a straight-chain, branched-chain or cyclic structure, or a structure of a combination thereof.

4. The liquid repellent according to any one of claims 1 to 3, wherein R^{ay} is a 2-hydroxyethyl group optionally having one or more substituents (at least one of the substituents is R^{fa}; R^{fa} is an alkyl group optionally having one or more substituents and into which one or more -0- moieties are optionally inserted, or an aryl group optionally having one or more substituents).

5. The liquid repellent according to any one of claims 1 to 4, wherein the poly(hydrocarbylamine) derivative is a poly(hydrocarbylamine) derivative having one or more constituent units represented by formula (Ul):
-chain hydrocarbon-N (-R^{ay}) - (U1)
in which the symbols are as defined above.

6. The liquid repellent according to any one of claims 1 to 5, wherein the poly(hydrocarbylamine) derivative is a polymer comprising:
ne terminal groups E,
np constituent units G^{p},
nqf constituent units G^{qf} and
nr constituent units G^{r}, wherein
the constituent units G^{p} in each occurrence are the same or different, and constituent units represented by formula (Up1) :
-CH₂CH₂-NH- (Up1);
the constituent units G^{qf} in each occurrence are the same or different, and constituent units represented by formula (Uq1) :
-CH₂CH₂-N (-R^{qfy}) - (Uq1)
in which R^{qfy} represents a hydroxyethyl group optionally having one or more substituents (at least one of the substituents is an alkyl group optionally having one or more substituents and into which one or more -O- moieties are optionally inserted, or an aryl group optionally having one or more substituents);
the constituent units G^{r} in each occurrence are the same or different, and constituent units represented by formula (Ur1) :
-CH₂CH₂-N (-R^{ot}) - (Ur1)
in which R^{ot} represents a substituent different from R^{qfy}; and
ne is an integer of 0 to 50,000,
np is an integer of 0 to 50,000,
nqf is an integer of 0 to 50,000,
nr is an integer of 0 to 50,000, and
the sum of np and nqf is an integer of 100 or more,
the ratio nqf /(np + nqf) is in the range of 0.02 to 100%,
the constituent units G^{p}, G^{qf} and G^{r} are bonded in an optional form, and
the constituent units G^{p}, G^{qf} and G^{r} are optionally linked to another constituent unit at a moiety not constituting the main chain.

7. The liquid repellent according to claim 6, wherein R^{qfy} is a hydroxyethyl group optionally having one or more substituents (at least one of the substituents is a fluoroalkyl group optionally having one or more substituents and into which one or more -O- moieties are optionally inserted).

8. The liquid repellent according to any one of claims 1 to 7, which is for surface treatment.

9. The liquid repellent according to any one of Claims 1 to 8, which is for imparting liquid repellency to a surface of an article.

10. A liquid repellent membrane comprising the liquid repellent according to any one of claims 1 to 9.

11. A method for producing the liquid repellent membrane according to claim 10, the method comprising:
1) coating a surface of an article with a liquid comprising poly(hydrocarbylamine);
2) further coating the surface with a liquid comprising oxirane optionally having one or more substituents (at least one of the substituents is an alkyl group optionally having one or more substituents and into which one or more -O- moieties are optionally inserted, or an aryl group optionally having one or more substituents), and reacting at least part thereof to form the liquid repellent membrane according to claim 10.

12. A method for producing the liquid repellent membrane according to claim 10, the method comprising:
coating a surface of an article with a liquid comprising
poly(hydrocarbylamine) and
oxirane optionally having one or more substituents (at least one of the substituents is an alkyl group optionally having one or more substituents and into which one or more -O-moieties are optionally inserted, or an aryl group optionally having one or more substituents); and
reacting at least part thereof to form the liquid repellent membrane according to claim 10.

13. An article comprising the liquid repellent membrane according to claim 10.

14. A method for producing an article comprising the liquid repellent membrane according to claim 10, the method comprising:
coating a surface of an article with a liquid comprising
poly(hydrocarbylamine) and
oxirane optionally having one or more substituents (at least one of the substituents is an alkyl group optionally having one or more substituents); and
reacting at least part thereof to form the liquid repellent membrane according to claim 10.

15. A polyethyleneimine derivative, which is polyethyleneimine substituted by one or more substituents, wherein at least one of the substituents is a substituent on an amine nitrogen in the polyethyleneimine, and is represented by the formula:
-C₂R₄OH
in which R in each occurrence is the same or different and represents a hydrogen atom or a substituent, provided that at least one of the 4 R is:
a fluoroalkyl group optionally having one or more substituents and into which one or more -O- moieties are optionally inserted;
an alkyl group optionally having one or more substituents and into which one or more -O- moieties are optionally inserted; or
a fluoroaryl group optionally having one or more substituents.

16. A liquid repellent comprising the polyethyleneimine derivative according to claim 15.

17. A kit of a liquid repellent comprising:
1) polyethyleneimine; and
2) oxirane optionally having one or more substituents (at least one of the substituents is an alkyl group optionally having one or more substituents and into which one or more -O-moieties are optionally inserted, or an aryl group optionally having one or more substituents).
